# FASCICULE DE BREVET EUROPEEN

(11) **EP 2 644 923 B1**
(45) Date de publication et mention de la délivrance du brevet: **06.05.2015**
(21) Numéro de dépôt: 13159786.6
(22) Date de dépôt: 18.03.2013
(51) Int. Cl.: F16D 11/16, F16D 3/24

(54) **Dispositif d'accouplement entre deux éléments tournants**
Kupplungvorrichtung zwischen zwei drehenden Elemente
A coupling device between two rotary elements

(30) Priorité: 28.03.2012 FR 1252806
(43) Date de publication de la demande: 02.10.2013
(73) Titulaire: Messier-Bugatti-Dowty, 78140 Vélizy-Villacoublay (FR)
(72) Inventeur: Eluard, Gilles, 78140 VELIZY-VILLACOUBLAY (FR)
(74) Mandataire: Parzy, Benjamin Alain

(56) Documents cités:
- DE-A1- 2 548 803
- FR-A- 1 367 974
- FR-A1- 2 453 314
- US-A- 1 642 907
- US-A- 1 748 146
- US-A- 1 933 072

## Description

L'invention concerne un dispositif d'accouplement entre deux arbres ou deux éléments tournants autour d'un même axe de rotation pour permettre l'entraînement sélectif en rotation d'un élément par l'autre.

### ARRIERE-PLAN TECHNOLOGIQUE DE L'INVENTION

On connaît des dispositifs d'accouplement comportant deux organes, chacun solidaire d'un des éléments à accoupler. Les organes sont mobiles axialement relativement l'un à l'autre entre une position éloignée dans laquelle les organes ne coopèrent pas et les éléments sont découplés, et une position en prise dans laquelle les organes coopèrent entre eux pour assurer une liaison en rotation des deux éléments. Un tel dispositif est connu par ex. de US 1748146.

L'invention est plus spécialement relative aux accouplements par obstacle, dans lesquels des parties saillantes de l'un des organes viennent se loger dans des creux en regard de l'autre organe lorsqu'ils sont en prise. Un accouplement connu de ce type est l'accouplement à crabots. Cependant, de tels accouplements nécessitent généralement une vitesse de rotation relative entre les deux organes nulle ou faible pour permettre la pénétration des parties saillantes dans les parties en retrait. Il faut donc au préalable synchroniser précisément les vitesses des deux éléments. Il est parfois possible de se passer d'une telle synchronisation, mais au prix de bruits de crabotage important, et de risques de détérioration des organes.

### OBJET DE L'INVENTION

L'invention a pour objet un dispositif d'accouplement du type à obstacle, tolérant à un manque de synchronisation.

### PRESENTATION DE L'INVENTION

En vue de la réalisation de ce but, on propose un dispositif d'accouplement de deux éléments montés tournants autour d'un même axe de rotation pour permettre l'entraînement sélectif en rotation d'un élément par l'autre, le dispositif comportant deux organes chacun solidaire d'un des éléments, les organes étant axialement mobiles relativement l'un à l'autre entre une position éloignée dans laquelle les organes ne coopèrent pas et les éléments sont découplés, et une position en prise dans laquelle les organes coopèrent entre eux pour assurer une liaison en rotation des deux éléments. Selon l'invention, l'un des organes forme un plateau ayant une face perpendiculaire à l'axe de rotation et dans lequel sont ménagés une pluralité de logements qui s'étendent selon des directions radiales ; l'autre des organes portant des rouleaux qui sont montés tournants selon des axes radiaux pour saillir dudit élément de sorte à pouvoir chacun pénétrer dans l'un des logements lorsque les organes sont en prise et coopérer avec les faces latérales du logement pour assurer une liaison en rotation des deux organes.

Ainsi, lors du rapprochement des deux éléments, si les rouleaux ne sont pas en face des logements, ils viennent buter contre la face du plateau en regard mais peuvent ensuite rouler sur le plateau, jusqu'à tomber dans les logements. Ils forment alors des obstacles qui communiquent le mouvement de rotation de l'élément auquel ils sont reliés à l'autre organe par appui sur les faces des logements. Ainsi, il n'est pas nécessaire de prévoir une synchronisation précise. Il suffit de faire en sorte que les deux organes tournent à des vitesses qui ne sont pas trop éloignées l'une de l'autre, afin de permettre l'entrée des rouleaux dans les logements.

L'invention sera mieux comprise à la lumière de la description détaillée qui suit d'un mode particulier de réalisation de l'invention

### PRESENTATION DES FIGURES

L'invention sera détaillée en référence aux figures des dessins annexés, parmi lesquelles :
- la figure 1 est une vue en perspective du dispositif de l'invention selon un mode particulier de réalisation, le dispositif étant en position éloignée ;
- La figure 2 est une vue de face de l'autre des organes du dispositif de la figure 1 qui porte le plateau à logements ;
- la figure 3 est une vue de face de celui des organes du dispositif de la figure 1 qui porte les rouleaux.

### DESCRIPTION DETAILLEE D'UN MODE PARTICULIER DE REALISATION

Le dispositif de l'invention est destiné à accoupler sélectivement deux arbres 1 et 2 montés tournants selon un même axe X de rotation. Ici, l'arbre 1 est solidaire d'un pignon, tandis que l'arbre 2 est solidaire d'un moteur.

Le dispositif de l'invention comporte essentiellement deux organes, dont un plateau 3 et un porte-rouleaux 4 qui sont respectivement solidaires en rotation des arbres 1 et 2. Ici, le porte-rouleaux 4 est monté sur l'arbre 2 via des cannelures (non visibles ici) qui permettent son déplacement axial au moyen d'une fourchette 5, elle-même déplacée par un actionneur 6.

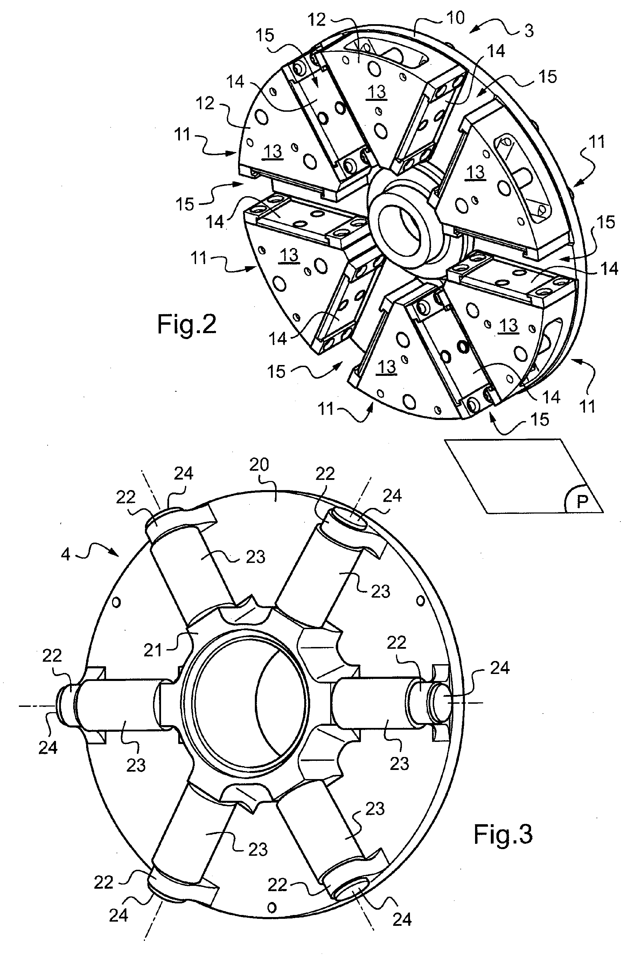

Comme cela est visible à la figure 2, le plateau 3 comporte une platine 10 sur laquelle sont fixés des secteurs 11, ici six secteurs, qui sont régulièrement espacés. Chacun des secteurs 11 comporte une cage 12 qui est rapportée sur la platine 10 et qui présente une face avant 13 tournée vers le porte-rouleaux 4 qui est coplanaire avec les autres faces avant des autres secteurs 11, de façon à définir ensemble une surface plane P perpendiculaire à l'axe X. Les cages 12 ont des flancs qui sont équipés de plaquettes amovibles 14, de sorte que deux plaquettes amovibles 14 en regard de deux cages 12 adjacentes définissent entre elles un logement 15, dont les faces parallèles s'étendent toutes deux selon des directions parallèles à une direction radiale. Les plaquettes amovibles 14 forment alors les faces latérales des logements 15.

Comme cela est visible à la figure 3, le porte-rouleaux 4 comporte une platine 20 associée à un moyeu central 21 qui comporte six orifices régulièrement espacés et creusés selon des directions radiales (les orifices ne sont pas visibles). La platine 20 comporte par ailleurs six paliers 22 disposés à la périphérie de la platine 20 pour être en alignement avec l'un des orifices du moyeu central. Des rouleaux 23 sont montés pour tourner sur des broches 24 (dont on voit ici la tête dépasser) engagées chacune dans l'un des orifices du moyeu central 21 et dans l'un des paliers 22. Ainsi, les rouleaux 23 sont portés par le porte-rouleaux 4 pour tourner autour d'axes radiaux. Les rouleaux 23 sont alors portés en saillie de la platine 20.

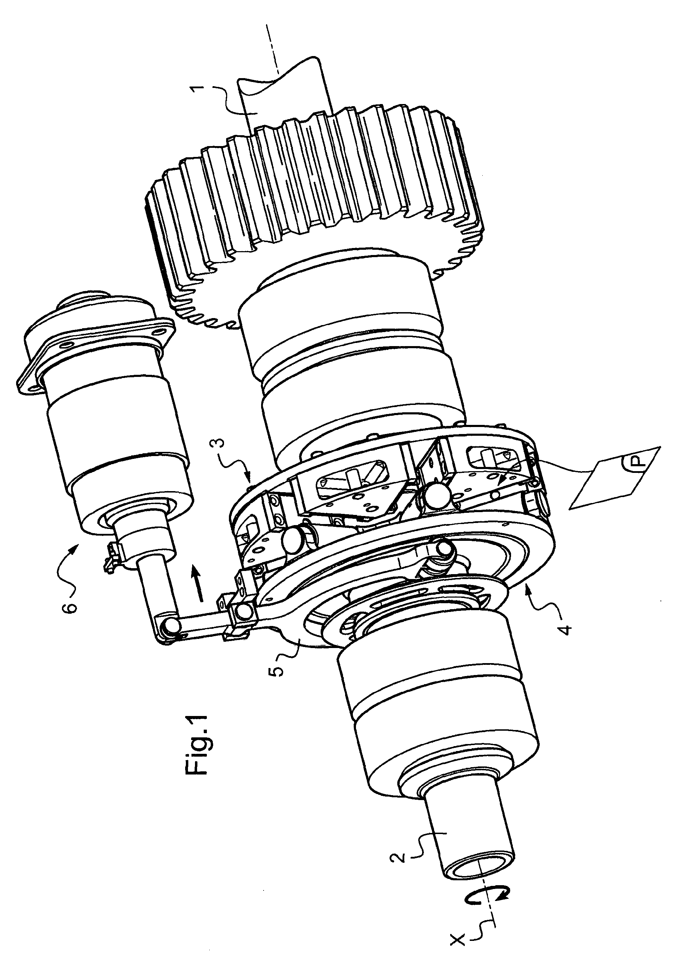

Revenant à la figure 1, sur laquelle le plateau 3 et le porte-rouleaux 4 sont ici dans la position éloignée. On cherche à accoupler en rotation l'arbre 2 et l'arbre 1, en vue d'assurer l'entraînement en rotation du pignon par le moteur. A cet effet, on commande l'actionneur 6 pour rapprocher le porte-rouleaux 4 du plateau 3. L'actionneur entraîne la fourchette 5, qui force ainsi le porte-rouleaux 4 à se rapprocher du plateau 3 (selon la flèche de la figure 1), jusqu'à ce que les rouleaux 23 viennent en appui sur la surface plane P du plateau 3. Il y a de fortes chances pour que les rouleaux 23 ne soient pas en regard des logements 15. Cependant, en raison de la différence de vitesse de rotation entre les deux organes, les rouleaux 23 vont rouler sur la surface plane P jusqu'à tomber dans les logements 15 en regard. Le mouvement axial du porte-rouleaux 4 se poursuit alors sous l'action de l'actionneur 6, jusqu'à engagement complet des rouleaux 23 dans les logements 15. Les rouleaux 23 vont alors appuyer sur l'une des plaquettes 14 en regard pour entraîner le plateau 3 à rotation. Ainsi, il n'y a pas besoin d'une synchronisation fine entre les vitesses de rotation des deux organes.

Pour le désaccouplement, il suffit de faire reculer axialement le porte-rouleaux 4 en commandant l'actionneur 6 dans le sens inverse jusqu'à ce que les rouleaux 23 soient désengagés des logements 15.

Selon un aspect particulier de l'invention, les plaquettes 14 sont réalisées en un matériau amortisseur propre à absorber les à-coups de transmission entre le porte-rouleaux 3 et le plateau 4.

On prévoit avantageusement un organe de butée axiale disposé entre le porte-rouleaux 4 et le plateau 3 pour arrêter axialement ces deux éléments lorsque les rouleaux 23 ont pénétré dans les logements 15. Selon un mode particulier de réalisation, l'organe de butée axiale comporte des plaquettes similaires aux plaquettes 14 qui sont disposées au fond des logements 15 de sorte que les rouleaux viennent en appui contre ces plaquettes de fond.

L'invention n'est pas limitée à ce qui vient d'être décrit, mais englobe toute variante entrant dans le cadre défini par les revendications.

En particulier, bien que le déplacement axial relatif des deux organes soit ici assuré par un actionneur 6 agissant sur une fourchette 5, tout autre mode de déplacement axial relatif pourra être envisagé dans le cadre de l'invention, comme par exemple un déplacement par un poussoir hydraulique.

En outre, bien que le plateau soit ici constitué d'une platine sur laquelle sont rapportés des secteurs, tout autre mode de fabrication pourra être envisagé, du moment que le plateau présente une surface plane sur laquelle peuvent venir appuyer les rouleaux, et des logements dans lesquels les rouleaux peuvent être engagés.

## Revendications

1. Dispositif d'accouplement de deux éléments montés tournants autour d'un même axe de rotation (X) pour permettre l'entraînement sélectif en rotation d'un élément par l'autre, le dispositif comportant deux organes (3,4) chacun solidaire d'un des éléments à accoupler, les organes étant axialement mobiles relativement l'un à l'autre entre une position éloignée dans laquelle les organes ne coopèrent pas et les éléments sont découplés, et une position en prise dans laquelle les organes coopèrent entre eux pour assurer une liaison en rotation des deux éléments, **caractérisé en ce que** l'un des organes forme un plateau (3) ayant une face (P) perpendiculaire à l'axe de rotation et dans lequel sont ménagés une pluralité de logements (15) qui s'étendent selon des directions radiales ; l'autre des éléments portant des rouleaux (23) qui sont montés tournants selon des axes radiaux pour saillir dudit élément de sorte à pouvoir chacun pénétrer dans l'un des logements lorsque les organes sont en prise et coopérer avec les faces latérales (14) du logement pour assurer une liaison en rotation des deux organes.

2. Dispositif selon la revendication 1, dans lequel le plateau comporte une platine (10) qui reçoit des secteurs (11) régulièrement espacés, les secteurs ayant des flancs qui reçoivent des plaquettes (14) amovibles, de sorte que deux plaquettes en regard portées par deux secteurs adjacent définissent les faces latérales d'un logement.

3. Dispositif selon la revendication 2, dans lequel les plaquettes (14) sont réalisées en un matériau amortisseur propre à absorber les à-coups de transmission entre les deux organes.

## Patentansprüche

1. Kupplungsvorrichtung zur Kopplung zweier Elemente, die um eine selbe Drehachse (X) drehbar gelagert sind, um einen selektiven Drehantrieb eines Elements durch das andere zu ermöglichen, wobei die Vorrichtung zwei Organe (3, 4) umfasst, die jeweils mit einem der zu koppelnden Elemente verbunden sind, wobei die Organe relativ zueinander axial zwischen einer entfernten Position, in der die Organe nicht zusammenwirken und die Elemente entkoppelt sind, und einer Eingriffsposition beweglich sind, in der die Organe miteinander zusammenwirken, um eine Drehverbindung der beiden Elemente zu gewährleisten, **dadurch gekennzeichnet, dass** eines der Organe eine Scheibe (3) bildet, die eine Fläche (P) hat, die senkrecht zur Drehachse ist, und in der eine Vielzahl von Aufnahmen (15) ausgebildet sind, die sich in radiale Richtungen erstrecken, wobei das andere der Elemente Rollen (23) trägt, die um radiale Achsen drehbar gelagert sind, um von dem genannten Element derart vorzustehen, dass sie jeweils in eine der Aufnahmen eingreifen können, wenn die Organe in Eingriff stehen, und mit den seitlichen Flächen (14) der Aufnahme zusammenwirken können, um eine Drehverbindung der beiden Organe sicherzustellen.

2. Vorrichtung nach Anspruch 1, wobei die Scheibe eine Platte (10) umfasst, die gleichmäßig beabstandete Sektoren (11) aufnimmt, wobei die Sektoren Flanken haben, die lösbare kleine Platten (14) aufnehmen, derart, dass zwei gegenüberliegende kleine Platten, die von zwei angrenzenden Sektoren getragen werden, seitliche Flächen einer Aufnahme definieren.

3. Vorrichtung nach Anspruch 2, wobei die kleinen Platten (14) aus einem Dämpfungsmaterial hergestellt sind, das dazu geeignet ist, die Übertragungsstöße zwischen den beiden Organen zu absorbieren.

## Claims

1. A device for coupling together two elements mounted to rotate about a common axis of rotation (X) in order to enable one of the elements to be selectively driven in rotation by the other, the device comprising two members (3, 4), each secured to a respective one of the elements for coupling together, the elements being axially movable relative to each other between a remote position in which the members do not co-operate and the elements are decoupled, and an engaged position in which the members co-operate with each other in order to provide a rotary connection between the two elements, the device being **characterized in that** one of the members forms a plate (3) having a face (P) perpendicular to the axis of rotation and in which a plurality of housings (15) are formed, the housings extending in radial directions; the other one of the elements carrying rollers (23) that are mounted to rotate about radial axes to project from said element so that each of them can penetrate into any one of the housings when the members are engaged and can co-operate with the side faces (14) of the housing in order to provide a rotary connection between the two members.

2. A device according to claim 1, wherein the plate comprises a disk (10) that receives regularly spaced apart sectors (11), the sectors having flanks that receive removable pads (14) such that two facing pads carried by two adjacent sectors define the side faces of a housing.

3. A device according to claim 2, wherein the pads (14) are made of a damper material suitable for absorbing the jolts in transmission between the two members.
